# EUROPEAN PATENT SPECIFICATION

(11) **EP 4 167 125 B1**
(45) Date of publication and mention of the grant of the patent: **06.05.2026**
(21) Application number: 20942870.5
(22) Date of filing: 08.12.2020
(51) Int. Cl.: G06V 10/46, G06V 20/64, G06F 18/10, G06F 18/20, A61C 7/00, G06T 7/12, G06T 7/149

(54) **3D TEETH MODEL GUM LINE IDENTIFYING METHOD, SYSTEM AND APPARATUS, AND STORAGE MEDIUM**
VERFAHREN, SYSTEM UND VORRICHTUNG ZUR IDENTIFIZIERUNG EINER DREIDIMENSIONALEN ZAHNMODELLGUMMILINIE SOWIE SPEICHERMEDIUM
PROCÉDÉ, SYSTÈME ET APPAREIL D'IDENTIFICATION DE LIGNE DE GENCIVES DE MODÈLE DE DENTS EN 3D, ET SUPPORT DE STOCKAGE

(30) Priority: 02.07.2020 CN 202010634000
(43) Date of publication of application: 19.04.2023
(73) Proprietor: Guangzhou Heygears IMC. Inc, Guangzhou, Guangdong 510663 (CN)
(72) Inventor: WANG, Yong, Guangzhou, Guangdong 510663 (CN); FENG, Wei, Guangzhou, Guangdong 510663 (CN)
(74) Representative: Zacco GmbH
(86) International application number: PCT/CN2020/134573
(87) International publication number: WO 2022/001001

(56) References cited:
- CN-A- 104 504 693
- CN-A- 106 037 979
- CN-A- 108 986 123
- CN-A- 108 986 123
- KR-B1- 101 476 715
- KR-B1- 101 476 715
- US-A1- 2020 125 069
- US-B2- 8 029 277
- US-B2- 8 442 283

## Description

### Cross-Reference to Related Disclosure

The present disclosure is proposed based on Chinese Patent Application No. 202010634000.2 and filed on 02 July 2020, and claims priority to the Chinese Patent Application.

### Technical Field

The present disclosure relates to the technical field of orthodontics, and in particular, to a method and system for identifying a gum line of a 3D tooth model, a device, and a storage medium.

### Background

### Term explanation:

Invisible Orthodontic: refers to invisible orthodontics without brackets, and belongs to one type of orthodontics.

With the development of scientific and technical information, technologies such as computer technology, manufacturing technology, digital modeling technology, material science, numerical control technology, etc. have rapidly developed and grew stronger, and these subjects merge with each other. In particular, the computer technology has been increasingly infiltrated into various aspects such as teaching, scientific research and clinical applications in various medical fields, and can achieve more progressive mutual cooperation. Moreover, with the development and popularity of measurement technology, people can conveniently acquire digitized tooth models, which plays an important role in the process of oral clinical diagnosis and treatment. The emergence and development of 3D printing technology has become one of the current hot topics, and applying the 3D printing technology to the medical field is also very common. 3D printing has been applied in the medical field for more than two decades, and is widely applied to operations such as oral planting, or thopaedics, and neurosurgery.

Dental treatment is an unavoidable problem for most people. With the improvement of computer software and hardware technologies and the appearance of increasingly precise tooth data, people also turn their attention from traditional pure manual dental treatment to digitized dental treatment such as tooth diagnosis and treatment in the invisible orthodontic, so as to improve the safety and success rate of dental treatment with the help of priori knowledge provided by advanced digital technology.

In the current application scenarios of tooth diagnosis and treatment in the invisible orthodontic, performing data processing on tooth models are all needed; however, data pre-processing of the tooth models occupies most of the time of 3D tooth printing work. In particular, in application scenarios of orthodontics, in addition to requiring to perform data pre-processing including placement, hollowing and Boolean operations on a tooth model, after printing is completed, it is also necessary to perform film pressing, and after the film pressing, manual cutting is required, or a gum line is manually drawn to supply to a CNC machine for cutting. This process needs to consume significant labor costs and significant workload. In order to increase the efficiency of the whole diagnosis and treatment process and enhance the user experience, it is necessary to shorten the data processing time of tooth model data.

In addition, currently, an automatic processing flow of orthodontics is still in a blank stage in China, and therefore there is an urgent need to achieve automatic generation and processing flow of orthodontics according to technologies such as artificial intelligence algorithm, 3D printing and numerical control machining, so as to improve the working efficiency and competitiveness of the whole industry.

Document CN104504693A discloses a method for obtaining a margin line of a tooth model, which generates a model by scanning, obtains feature points and generates feature lines by screening the feature points, determines an initial point of the margin line, and screens the desired margin line by screening the feature lines.

Document KR101476715B1 discloses a transparent orthodontic device and a method for producing the same. The transparent orthodontic device comprises: an inserting orthodontic unit which is covered on a tooth group including tooth pocket grooves which are formed corresponding to an orthodontic shape; and a support unit which is extended from the inserting orthodontic unit to gums, wherein a removing handle is formed on the outer gums of the molar.

Document CN108986123A discloses a method for segmenting a three-dimensional digital model of a jaw, comprising: obtaining a three-dimensional digital model of a first jaw; and segmenting each part of the first three-dimensional digital model of a jaw using a trained deep artificial neural network teeth.

Regarding the current domestic technical problems of low degree of automation, poor efficiency and poor user experience during data processing of tooth models in an orthodontic automatic process, the technical solutions of some embodiments of the present disclosure take efficiency improvement as a basis, innovatively explore a combination of the dental field and the 3D printing technology, and integrate the digital 3D printing technology into a dental restoration process. By introducing artificial intelligence technology and a series of algorithms to automatically identify data of a gum line, manpower is reduced, digital production is deepened, and the vacancy of technology of low degree of automation, poor efficiency and poor user experience during data processing of tooth models in an orthodontic process is filled up, laying a firm foundation for subsequent application scenarios of combining dentistry with 3D technology.

### Summary

In order to solve the described technical problems, the object of the present disclosure is to provide a method and system for identifying a gum line of a 3D tooth model, a device, and a storage medium.

A first technical solution used in some embodiments of the present disclosure is:
a method for identifying a gum line of a 3D tooth model, includes the following steps:
a plurality of feature points are extracted from the 3D tooth model based on a geometric algorithm of curvature, each of the feature points is pre-processed, and a feature contour point group is output;
a first fitting reference line is obtained from a pre-stored fitting reference line pool, wherein the first fitting reference line is matched with a shape parameter of the 3D tooth model, includes:
   the shape parameter of the 3D tooth model is identified, and a direction of the 3D tooth model is determined according to the shape of the 3D tooth model;
   feature contour lines are obtained from the pre-stored fitting reference line pool with the feature contour lines having the same direction as feature contour of the 3D tooth model, based on the direction of the 3D tooth model; and
   the first fitting reference line is screened and obtained from the feature contour lines with the same-direction according to a pre-established coordinate system and a first threshold;
   the first fitting reference line is performed an iterative operation based on of the feature contour point group, to generate an initial fitted line, wherein the iterative operation includes:
      points of the first fitting reference line are projected to feature points, closest thereto, of the feature contour point group, and a projection error is determined;
      the projecting is cycled and when the projection error is not less than a set threshold is determined; and
      the projecting is stopped when the projection error is less than a set threshold; and
      the initial fitted line is performed smoothing processing by using a dimensionality reduction algorithm, to output the gum line, includes:
         smoothing processing is performed on the initial fitted line by using a principal component analysis method, and main direction points of the initial fitted line is determined; and
         smooth connection is performed on the main direction points of the initial fitted line subjected to the smoothing processing according to an interpolation spline, to output the gum line;
         wherein the geometric algorithm of curvature refers to a method to calculate a rotation rate of the tangential direction angle of a surface on the 3D tooth model to a arc length, and the each of the feature points is characterized by a corresponding rotation rate.

A second technical solution used in some embodiments of the present disclosure is:
a system for identifying a gum line of a 3D tooth model, includes:
an extraction module, configured to extract a plurality of feature points from the 3D tooth model based on a geometric algorithm of curvature, pre-process each of the feature points, and output a feature contour point group;
a matching module, configured to obtain a first fitting reference line from a pre-stored fitting reference line pool, wherein the first fitting reference line is matched with a shape parameter of the 3D tooth model;
wherein the matching module includes:
   a determination unit, configured to identify the shape parameter of the 3D tooth model, and determine a direction of the 3D tooth model according to the shape of the 3D tooth model;
   a matching unit, configured to obtain feature contour lines from the pre-stored fitting reference line pool with the feature contour lines having the same direction as feature contour of the 3D tooth model, based on the direction of the 3D tooth model; and
   a screening unit, configured to screen and obtain the first fitting reference line from the feature contour lines with the same-direction according to a pre-established coordinate system and a first threshold;
   an iteration module, configured to perform an iterative operation on the first fitting reference line based on the feature contour point group, to generate an initial fitted line, wherein the iterative operation includes: projecting points of the first fitting reference line to feature points, closest thereto, of the feature contour point group, and determining a projection error;
   cycling the projecting and the determining when the projection error is not less than a set threshold; and stopping the projecting when the projection error is less than a set threshold; and
   an output module, configured to perform smoothing processing on the initial fitted line by using a dimensionality reduction algorithm, to output the gum line;
   wherein the output module includes:
      a smoothing unit, configured to perform smoothing processing on the initial fitted line by using a principal component analysis method, and determine main direction points of the initial fitted line, wherein the dimensionality reduction algorithm comprises the principal component analysis method; and
      a smooth unit, configured to perform smooth connection on the main direction points of the initial fitted line subjected to the smoothing processing according to an interpolation spline, to output the gum line;
      wherein the geometric algorithm of curvature refers to a method to calculate a rotation rate of the tangential direction angle of a surface on the 3D tooth model to a arc length, and the each of the feature points is characterized by a corresponding rotation rate.

A third technical solution used in some embodiments of the present disclosure is:
a device, includes a memory and a processor, wherein the memory is used for storing at least one program, and the processor is used for loading the at least one program to execute the described method.

A fourth technical solution used in some embodiments of the present disclosure is:
a storage medium, in which a program executable by a processor is stored, wherein the program executable by the processor is used for executing the described method when executed by the processor.

### Brief Description of the Drawings

Fig. 1 is a flowchart of steps of a method for identifying a gum line of a 3D tooth model in some embodiments of the present disclosure;
Fig. 2 is a structural block diagram of a system for identifying a gum line of a 3D tooth model in some embodiments of the present disclosure; and
Fig. 3 is a schematic flow diagram of a method for identifying a gum line of a 3D tooth model provided in some embodiments of the present disclosure.

### Detailed Description of the Embodiments

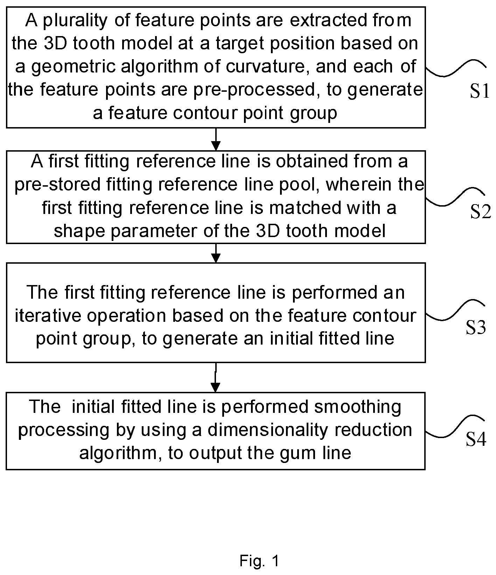

As shown in Fig. 1, the present embodiment provides a method for identifying a gum line of a 3D tooth model, including the following steps:
S1, a plurality of feature points are extracted from the 3D tooth model at a target position based on a geometric algorithm of curvature, and each of the feature points are pre-processed, to generate a feature contour point group;
S2, a first fitting reference line is obtained from a pre-stored fitting reference line pool, wherein the first fitting reference line is matched with a shape parameter of the 3D tooth model;
S3, the first fitting reference line is performed an iterative operation based on the feature contour point group, to generate an initial fitted line; and
S4, the initial fitted line is performed smoothing processing by using a dimensionality reduction algorithm, to output the gum line.

In the present embodiment, the 3D tooth model is a tooth model which is prepared by processing and repairing based on a 3D printing technology and a computer program and has a corresponding plane. The geometric algorithm of curvature refers to a method to calculate a rotation rate of a tangential direction angle of a surface on the 3D tooth model with respect to a corresponding arc length, which indicates the recessed or raised degree of the surface. A direction of the first fitting reference line is the same as a direction of the feature contour point group (a direction of the 3D tooth model), so as to ensure that the range of an optimal contour line can cover a region of the feature contour point group. Specifically, after the shape parameter and a maximum bottom surface of the imported 3D tooth model are identified, the 3D tooth model is adjusted to a target position; then the plurality of feature points are extracted from the 3D tooth model at the target position according to the geometric algorithm of curvature; a feature contour line having the minimum deviation from a pre-stored fitting reference line pool is obtained, as the first fitting reference line, wherein the first fitting reference line is matched with the identified shape parameter of the 3D tooth model; the iterative operation on the first fitting reference line is performed according to the feature contour point group, to generate the initial fitted line; and the smoothing processing on the initial fitted line is performed by using the dimensionality reduction algorithm, to finally output the gum line, so as to complete preprocessing of data of the 3D tooth model. Regarding the problems of large workload, high labor costs, low working efficiency and poor user experience in data processing of a tooth model, such as in the current application scenarios of invisible orthodontic, the technical solutions of some embodiments of the present disclosure provide a method for identifying a gum line of a 3D tooth model, which can greatly simplify an orthodontic automatic generation and processing flow, reduce the working costs, shorten the data processing time of tooth model data, improve the working efficiency, and enhance the user experience, and also establish application scenarios combining dental diagnosis and treatment with a 3D technology, and supplement the blank of domestic orthodontic automatic processing flow. In addition, the method for identifying a gum line of a 3D tooth model provided in the present embodiment is also applicable to tooth models having arbitrary planes and directions, and the implementation of some embodiments of the present disclosure is not affected by the other tooth model types having arbitrary planes.

As at least one alternative embodiment, the pre-processing in the step S1 includes filtering or denoising; the step S1 includes the following steps:
S11, the 3D tooth model is acquired, the maximum bottom surface and a shape parameter of the 3D tooth model are identified, and a normal vector of the maximum bottom surface is output;
S12, the plurality of feature points are extracted from the 3D tooth model at a target position by using the geometric algorithm of curvature, wherein the feature points are distributed in recessed and raised regions of the 3D tooth model; and
S13, each of the extracted feature points is performed filtering processing or denoising processing, to generate a feature contour point group.

In the present embodiment, the initially obtained feature points of the 3D tooth model are denoised or filtered, to eliminate the effect of feature points in non-gum line regions on the fitting process subsequently performed on contour lines; and the geometric algorithm of curvature refers to a method to calculate a rotation rate of a tangential direction angle of a surface on the 3D tooth model with respect to a corresponding arc length, which indicates the recessed or raised degree of the surface, and said recessed or raised degree is referred to as feature in the solutions of some embodiments of the present disclosure, and the feature points can be extracted from recessed and raised regions of the 3D tooth model by means of a curvature calculation method.

As at least one alternative embodiment, the step S11 includes the following steps:
S111, the 3D tooth model is acquired, the maximum bottom surface and the shape parameter of the 3D tooth model are identified, and a normal vector of the maximum bottom surface is output;
S112, the 3D tooth model is rotated to a target plane according to the normal vector of the maximum bottom surface and a first preset normal vector;
S113, a contour of the 3D tooth model on the target plane is acquired, a curvilinear equation of a tooth skeleton is determined according to the contour, and a direction vector of the 3D tooth model is output; and
S114, the 3D tooth model is rotated to the target position according to the direction vector of the 3D tooth model and a second preset normal vector.

In the present embodiment, the first preset normal vector is a corresponding normal vector of the 3D tooth model when the 3D tooth model is rotated to the target plane; and the second preset normal vector is a corresponding normal vector of the 3D tooth model when the 3D tooth model is rotated to the target position. Specifically, first, an imported 3D tooth model is acquired, and by acquiring a 3D tooth model having a bottom surface in any direction, a normal vector of the bottom surface is acquired, and the 3D tooth model is rotated to the target plane on based on a cross product method and the first preset normal vector; second, when the 3D tooth model is located in the target plane, the 3D tooth model is projected to obtain a tooth contour line; skeleton extraction on the shape of the tooth contour line is performed, and the extracted skeleton shape is performed noise processing, to acquire a smooth and continuous skeleton line; a skeleton curvilinear equation is solved, to obtain the second preset normal vector of the target position; and based on the obtained the second preset normal vector of the target position, a rotation angle and a rotation axis are worked out according to a cross product method, and then the 3D tooth model is rotated to the target position, thereby a 3D tooth model in any direction is automatically adjusted to the target position.

As at least one alternative embodiment, the shape parameter includes the shape of the 3D tooth model, and the step S2 includes the following steps:
S21, a direction of the 3D tooth model is determined according to the shape of the 3D tooth model;
S22, feature contour lines with the same direction as the 3D tooth model feature contour are obtained from the pre-stored fitting reference line pool, wherein the feature contour lines are matched with the direction of the 3D tooth model; and
S23, the first fitting reference line is screened from the same-direction feature contour lines according to a pre-established coordinate system and a first threshold.

In the present embodiment, the coordinate system is a rectangular coordinate system with X, Y and Z axes, and other coordinate systems may also be selected according to application scenarios, which are not described herein again. The first threshold refers to a value that achieves a minimum deviation between the obtained same-direction feature contour line and the 3D tooth model in the established coordinate system. Each feature contour line refers to a gum line file of 3D tooth model, and the file is composed of point coordinates; and the fitting reference pool actually includes historical gum lines that have been subjected to smoothing processing, these gum lines being generated based on other tooth models.

As at least one alternative embodiment, the step S3 includes the following steps:
S31, a centroid of the first fitting reference line and a centroid of the feature contour point group is performed geometric superposition based on the pre-established coordinate system; and
S32, the first fitting reference line and each of the feature points of the feature contour point group are performed iterative fitting by using an approximate iterative algorithm, to generate the initial fitted line.

In the present embodiment, the approximate iterative algorithm means that, after the projection of the first fitting reference line, cyclic iteration is performed until the projection error is less than a set threshold; after the feature contour point group and the first fitting reference line are acquired, the centroid of the first fitting reference line and a centroid of a feature contour point group are geometrically superposed in the established coordinate system; and after the cyclic projection iteration, projected points are connected to form the initial fitted line, so as to ensure that the optimal feature contour line can cover the region of the feature contour point group.

As at least one alternative embodiment, the dimensionality reduction algorithm uses a principal component analysis method, and the step S4 includes the following steps:
S41, the initial fitted line is performed smoothing processing by using the principal component analysis method, and main direction points of the initial fitted line are determined; and
S42, the main direction points of the initial fitted line subjected to the smoothing processing are smoothly connected according to an interpolation spline, to output the gum line.

In the present embodiment, the generated initial fitted line is not a smooth line, and may have situations of local folding and deviation. With regard to such situations, the principal component analysis (PCA) method is used to acquire a main contour shape of the initial fitted line to determine main direction points of the contour, and the main direction points of the initial fitted line are smoothly connected again by using an interpolation spline, such as a Kochanek-Bartels pattern, thereby avoiding unsmooth regions of line segments, and a final smooth gum line required is obtained.

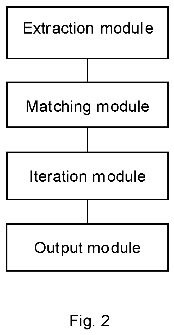

As shown in Fig. 2, the present embodiment provides a system for identifying a gum line of a 3D tooth model, including:
an extraction module, configured to extract a plurality of feature points from the 3D tooth model based on a geometric algorithm of curvature, pre-process each of the feature points, and output a feature contour point group;
a matching module, configured to obtain a first fitting reference line from a pre-stored fitting reference line pool, wherein the first fitting reference line is matched with a shape parameter of the 3D tooth model;
an iteration module, configured to perform an iterative operation on the first fitting reference line based on the feature contour point group, to generate an initial fitted line; and
an output module, configured to perform smoothing processing on the initial fitted line by using a dimensionality reduction algorithm, to output the gum line.

As at least one alternative embodiment, the extraction module includes:
an identification unit, configured to adjust the 3D tooth model to a target position, after identifying the shape parameter and a maximum bottom surface of the 3D tooth model;
an extraction unit, configured to extract the plurality of feature points from the 3D tooth model at the target position by using the geometric algorithm of curvature, wherein the plurality of feature points are distributed in recessed and raised regions of the 3D tooth model; and
a generation unit, configured to perform filtering processing or denoising processing on the each of the extracted feature points, and then generate the feature contour point group.

As at least one alternative embodiment, the identification unit includes:
an acquisition sub-unit, configured to acquire the 3D tooth model, identify the maximum bottom surface and the shape parameter of the 3D tooth model, and output a normal vector of the maximum bottom surface;
a first rotation sub-unit, configured to rotate the 3D tooth model to a target plane according to the normal vector of the maximum bottom surface and a first preset normal vector;
an output sub-unit, configured to acquire a contour of the 3D tooth model on the target plane, determine a skeleton curvilinear equation of a tooth model according to the contour, and output a direction vector of the 3D tooth model based on the skeleton curvilinear equation; and
a second rotation sub-unit, configured to rotate the 3D tooth model to the target position according to the direction vector of the 3D tooth model and a second preset normal vector.

As at least one alternative embodiment, the matching module includes:
a determination unit, configured to determine a direction of the 3D tooth model according to the shape of the 3D tooth model;
a matching unit, configured to match feature contour lines with the same direction of the 3D tooth model feature contour, from a pre-stored fitting reference line pool, based on the direction of the 3D tooth model; and
a screening unit, configured to screen the first fitting reference line from the same-direction feature contour lines according to a pre-established coordinate system and a first threshold.

As at least one alternative embodiment, the iteration module includes:
a superposition unit, configured to perform geometric superposition on the centroid of the first fitting reference line and the centroid of the feature contour point group based on the pre-established coordinate system; and
an iteration unit, configured to perform iterative fitting on the first fitting reference line and each of the feature points of the feature contour point group by using an approximate iterative algorithm, to generate the initial fitted line.

As at least one alternative embodiment, the output module includes:
a smoothing unit, configured to perform smoothing processing on the initial fitted line by using the principal component analysis method, and determine main direction points of the initial fitted line; and
a smooth unit, configured to regarding the initial fitted line subjected to the smoothing processing, smoothly connect the main direction points of the initial fitted line according to an interpolation spline, to output the gum line.

A device, including a memory and a processor, wherein the memory is used for storing at least one program, and the processor is used for loading the at least one program to execute the method according to the method embodiment.

The device of the present embodiment can execute the method for identifying a gum line of a 3D tooth model provided by the method embodiment of the present disclosure, can execute any combined implementation steps of the method embodiment, and has the corresponding functions and beneficial effects of the method.

A storage medium, in which a program executable by a processor is stored, wherein the program executable by the processor is used for executing the method of the method embodiment when executed by the processor.

### Specific Embodiment

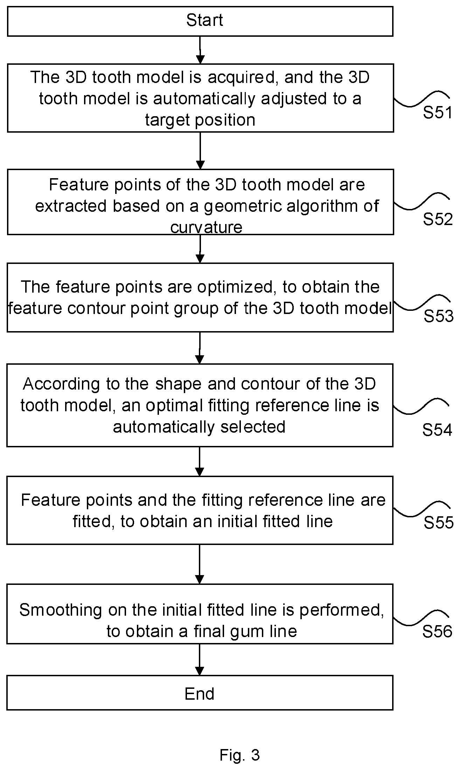

Fig. 3 is a schematic flow diagram of a method for identifying a gum line of a 3D tooth model provided in some embodiments of the present disclosure. Said method includes the following steps:
A 3D tooth model is imported, and a rectangular coordinate system is established.

S51, The 3D tooth model is acquired, and the 3D tooth model is automatically adjusted to a target position.

As at least one alternative embodiment:
(1) The imported 3D tooth model is a tooth model having a bottom surface in any direction, wherein the tooth model is a digital three-dimensional body composed of a series of triangular patches.
(2) A maximum plane of the 3D tooth model is detected. Wherein the method for detecting the maximum plane of the 3D tooth model is: a certain triangular patch is set, the set triangular patch and the 3D tooth model composed of triangular patches are superposed. An error threshold e is set, and when e is greater than a certain value, it is considered that the set triangular patch is not flush with the patches on the 3D tooth model; otherwise, it is considered that they are located on the same plane. When the set triangular patch is on the same plane as a certain patch of the 3D tooth model, the two are superposed together, and a next triangular patch is continuously searched and an error threshold is determined. The described steps are repeated until the maximum plane of the 3D tooth model is obtained. During the detection of the maximum plane of the 3D tooth model, an equation of the plane thereof can be obtained.
(3) According to a cross product operation method, a rotation angle and a rotation axis are solved according to vector values before and after rotation, wherein the cross product operation method is a binary operation of vectors in a vector space, and an operation result thereof is a vector rather than a scalar; and an arbitrary model can be rotated to a desired spatial position according to the described rotation angle and the rotation axis.
(4) The 3D tooth model is acquired based on the rotation achieved in (3) , and then the 3D tooth model is projected into a tooth contour line, wherein the tooth contour line is a contour of object obtained by projecting an object in a 3D space onto a 2D plane. The contour line of the 3D tooth model is obtained, and can be represented by a quadratic curvilinear equation. A direction vector of the 3D tooth model can be obtained by solving the curvilinear equation; and according to the cross product operation method as in (3), the rotation angle and the rotation axis are solved according to vector values before and after rotation, and the 3D tooth model is rotated to a desired target position based on a target plane according to the described rotation angle and the rotation axis thereof.

S52, Feature points of the 3D tooth model are extracted based on a geometric algorithm of curvature.

Specifically: after the 3D tooth model is placed to the target position, the feature points extracted from the 3D tooth model are filtered and de-noised according to the geometric algorithm of curvature, so as to obtain a feature contour of the 3D tooth model. The geometric algorithm of curvature refers to a method to calculate a rotation rate of a tangential direction angle of a certain surface on a 3D tooth model with respect to a corresponding arc length, which indicates the recessed or raised degree of the surface, and said degree is also referred to as feature in the present solution, and the feature points of recessed and raised regions of the tooth model can be acquired by means of a geometric algorithm of curvature (the true gum line on a tooth model is also reflected by recessed and raised regions).

S53, The feature points are optimized, to obtain the feature contour point group of the 3D tooth model.

Specifically: for feature points of the 3D tooth model obtained in Step S52 , denoising processing need be performed on other parts rather than the gum line region. The other parts of teeth also have recessed or raised regions which are also considered as features, which will affect subsequent fitting with contour lines; therefore need to be filtered or removed, so as to finally obtain optimal feature points; wherein the feature contour point group includes a plurality of feature points remaining after optimization, and the distribution shape of the feature points in the feature contour point group (or feature contour point group shape for short) is similar to the gum line contour of the 3D tooth model. It should be noted that the centroid of the feature contour point group may be understood as the centroid of the feature contour point group shape.

S54, According to the shape and contour of the 3D tooth model, an optimal fitting reference line is automatically selected.

Specifically: (1) the optimal fitting reference line is automatically selected from the placed tooth model according to the shape and contour of the imported tooth model, wherein the fitting reference line refers to the gum line file of 3D tooth model, and the file is composed of point coordinates; and (2) the main method for searching for the optimal fitting reference line is: first, the same batch of tooth fitting reference line data in the same direction are matched according to the direction of the 3D tooth model; and second, a fitting reference line with the minimum deviation, i.e. the optimal fitting reference line is selected from the screened same-direction data, according to the matching degree between the fitting reference lines and the 3D tooth model determined based on three directions X, Y and Z.

S55, Feature points and the fitting reference line are fitted, to obtain an initial fitted line.

Specifically: the feature points and the optimal fitting reference line are acquired, and the fitting reference line needs to be overlapped with or drawn close to the feature points of feature contour point group as far as possible, i.e. the centroid of the fitting reference line is translated in three directions, i.e. X, Y and Z, to coincide with the centroid of the 3D tooth model; the centroid of the fitting reference line can made to coincide with the centroid of the feature contour point group shape, and also it is ensured that the fitting reference line can cover the region of the feature points in the feature contour point group. (2) An approximate iterative algorithm is used to fit the fitting reference line and the feature points of the feature contour point group, to form an initial fitted line, wherein the fitting is to project points of the fitting reference line (substantially include a series of coordinate points) to the feature points closest thereto; and the approximate iteration means that after the contour line is projected, iteration is continued until the projection error is less than a set threshold. (3) After the iteration is completed, the projected points are connected to form an initial fitted line.

S56, Smoothing on the initial fitted line is performed, to obtain a final gum line.

Specifically: the initial fitted line is obtained, wherein as the initial fitted line is not a smooth line, and may have situations of local folding and deviation. With regard to such situations, in the present solution, a principal component analysis method is used to acquire a main contour shape of the initial fitted line, main direction points of the contour are determined, and the main direction points are smoothly connected by using a Kochanek-Bartels pattern, thereby unsmooth regions of line segments are avoided, and the final smooth gum line required is obtained.

S57, Ending, the final gum line of the 3D tooth model is output.

The invention is not limited to the disclosed exemplary embodiments, but by the scope of the following claims.

## Claims

1. A computer-implemented method for identifying a gum line of a 3D tooth model, comprising:
extracting a plurality of feature points from the 3D tooth model based on a geometric algorithm of curvature, pre-processing each of the feature points, and outputting a feature contour point group;
obtaining a first fitting reference line from a pre-stored fitting reference line pool with the first fitting reference line being matched with a shape parameter of the 3D tooth model, comprising:
identifying the shape parameter of the 3D tooth model, and determining a direction of the 3D tooth model according to the shape of the 3D tooth model;
obtaining feature contour lines from the pre-stored fitting reference line pool with the feature contour lines having the same direction as feature contour of the 3D tooth model, based on the direction of the 3D tooth model; and
screening and obtaining the first fitting reference line from the feature contour lines with the same-direction according to a pre-established coordinate system and a first threshold; performing an iterative operation on the first fitting reference line based on the feature contour point group, to generate an initial fitted line, wherein the iterative operation comprising:
projecting points of the first fitting reference line to feature points, closest thereto, of the feature contour point group, and determining a projection error;
cycling the projecting and the determining when the projection error is not less than a set threshold; and
stopping the projecting when the projection error is less than a set threshold; and
performing smoothing processing on the initial fitted line by using a dimensionality reduction algorithm, to output the gum line, characterizedin that, comprising:
performing smoothing processing on the initial fitted line by using a principal component analysis method, and determining main direction points of the initial fitted line; and
performing smooth connection on the main direction points of the initial fitted line subjected to the smoothing processing according to an interpolation spline, to output the gum line;
wherein the geometric algorithm of curvature refers to a method to calculate a rotation rate of the tangential direction angle of a surface on the 3D tooth model to an arc length, and each of the feature points is **characterized by** a corresponding rotation rate.

2. The method as claimed in claim 1, wherein the pre-processing comprises filtering processing or denoising processing; and the step of extracting a plurality of feature points from the 3D tooth model based on a geometric algorithm of curvature, pre-processing each of the feature points, and outputting a feature contour point group comprises:
after identifying the shape parameter and a maximum bottom surface of the 3D tooth model, adjusting the 3D tooth model to a target position;
extracting the plurality of feature points from the 3D tooth model at the target position by using the geometric algorithm of curvature, wherein the plurality of feature points are distributed in recessed and raised regions of the 3D tooth model; and
performing filtering processing or denoising processing on the each of the extracted feature points, to generate the feature contour point group.

3. The method as claimed in claim 2, wherein the step of after identifying the shape parameter and a maximum bottom surface of the 3D tooth model, adjusting the 3D tooth model to a target position comprises:
acquiring the 3D tooth model, identifying the maximum bottom surface and the shape parameter of the 3D tooth model, and outputting a normal vector of the maximum bottom surface;
rotating the 3D tooth model to a target plane according to the normal vector of the maximum bottom surface and a first preset normal vector;
acquiring a contour of the 3D tooth model on the target plane, determining a skeleton curvilinear equation of a 3D tooth model according to the contour, and outputting a direction vector of the 3D tooth model based on the skeleton curvilinear equation; and
rotating the 3D tooth model to the target position according to the direction vector of the 3D tooth model and a second preset normal vector.

4. The method as claimed in claim 3, wherein the first preset normal vector is a corresponding normal vector of the 3D tooth model when the 3D tooth model is rotated to the target plane; and the second preset normal vector is a corresponding normal vector of the 3D tooth model when the 3D tooth model is rotated to the target position.

5. The method as claimed in any one of claims 3-4, wherein the step of acquiring a contour of the 3D tooth model on the target plane, determining a skeleton curvilinear equation of a 3D tooth model according to the contour comprises:
projecting the 3D tooth model to obtain the contour of the 3D tooth model;
extracting a skeleton from the contour, and denoising the extracted skeleton to obtain the skeleton line, and determining the skeleton curvilinear equation based on the skeleton line.

6. The method as claimed in any one of claims 3-5, wherein the step of adjusting the 3D tooth model to a target position comprises:
obtaining a rotation angle and a rotation axis according to vector values before and after a rotation;
rotating the 3D tooth model to a target plane according to the rotation angle and the rotation axis;
obtaining another rotation angle and another rotation axis according to vector values before and after another rotation;
rotating the 3D tooth model to the target position according to the another rotation angle and another rotation axis.

7. The method as claimed in claim 1, wherein the step of screening and obtaining the first fitting reference line from the feature contour lines with the same-direction according to a pre-established coordinate system and a first threshold comprises:
screening a reference line with a minimum deviation from the feature contour lines, to obtain the first fitting reference line, wherein the first threshold is a value representing the minimum deviation between matched feature contour lines and the 3D tooth model.

8. The method as claimed in any one of claims 1 to 7, wherein the step of performing an iterative operation on the first fitting reference line based on the feature contour point group, to generate an initial fitted line comprises:
performing geometric superposition on a centroid of the first fitting reference line and a centroid of the feature contour point group based on the pre-established coordinate system; and
performing iterative fitting on the first fitting reference line and each of the feature points of the feature contour point group by using an approximate iterative algorithm, to generate the initial fitted line.

9. The method as claimed in any one of claims1-8, wherein a direction of the first fitting reference line is the same as a direction of the feature contour point group such that the first fitting reference line covers a region of the feature contour point group.

10. A data processing system for identifying a gum line of a 3D tooth model, comprising:
an extraction module, configured to extract a plurality of feature points from the 3D tooth model based on a geometric algorithm of curvature, pre-process each of the feature points, and output a feature contour point group;
a matching module, configured to obtain a first fitting reference line from a pre-stored fitting reference line pool with the first fitting reference line being matched with a shape parameter of the 3D tooth model;
wherein the matching module comprises:
a determination unit, configured to identify the shape parameter of the 3D tooth model, and determine a direction of the 3D tooth model according to the shape of the 3D tooth model;
a matching unit, configured to obtain feature contour lines from the pre-stored fitting reference line pool with the feature contour lines having the same direction as feature contour of the 3D tooth model, based on the direction of the 3D tooth model; and
a screening unit, configured to screen and obtain the first fitting reference line from the feature contour lines with the same-direction according to a pre-established coordinate system and a first threshold;
an iteration module, configured to perform an iterative operation on the first fitting reference line based on the feature contour point group, to generate an initial fitted line, wherein the iterative operation comprises: projecting points of the first fitting reference line to feature points, closest thereto, of the feature contour point group, and determining a projection error;
cycling the projecting and the determining when the projection error is not less than a set threshold; and stopping the projecting when the projection error is less than a set threshold; and
an output module, configured to perform smoothing processing on the initial fitted line by using a dimensionality reduction algorithm, to output the gum line;
**characterized in that**, the output module comprises:
a smoothing unit, configured to perform smoothing processing on the initial fitted line by using a principal component analysis method, and determine main direction points of the initial fitted line, wherein the dimensionality reduction algorithm comprises the principal component analysis method; and
a smooth unit, configured to perform smooth connection on the main direction points of the initial fitted line subjected to the smoothing processing according to an interpolation spline, to output the gum line;
wherein the geometric algorithm of curvature refers to a method to calculate a rotation rate of the tangential direction angle of a surface on the 3D tooth model to an arc length, and the each of the feature points is **characterized by** a corresponding rotation rate.

11. A computer program comprising instructions which, when the program is executed by a computer, cause the computer to carry out the method according to any one of claims 1-9.

12. A computer-readable storage medium comprising instructions which, when executed by a computer, cause the computer to carry out the method according to any one of claims 1-9 when executed by the computer.

## Patentansprüche

1. Computerimplementiertes Verfahren zum Identifizieren einer Zahnfleischlinie eines 3D-Zahnmodells, umfassend:
Extrahieren einer Vielzahl von Merkmalspunkten aus dem 3D-Zahnmodell basierend auf einem geometrischen Algorithmus einer Krümmung, Vorverarbeiten jedes der Merkmalspunkte und Ausgeben einer Merkmalskonturpunktgruppe;
Erlangen einer ersten Passreferenzlinie aus einem vorab gespeicherten Passreferenzlinienpool, wobei die erste Passreferenzlinie mit einem Formparameter des 3D-Zahnmodells abgeglichen wird, umfassend:
Identifizieren des Formparameters des 3D-Zahnmodells und Bestimmen einer Richtung des 3D-Zahnmodells gemäß der Form des 3D-Zahnmodells;
Erlangen von Merkmalskonturlinien aus dem vorab gespeicherten Passreferenzlinienpool, wobei die Merkmalskonturlinien die gleiche Richtung wie Merkmalskonturlinien des 3D-Zahnmodells aufweisen, basierend auf der Richtung des 3D-Zahnmodells; und
Prüfen und Erlangen der ersten Passreferenzlinie aus den Merkmalskonturlinien mit der gleichen-Richtung gemäß einem vorab eingerichteten Koordinatensystem und einem ersten Schwellenwert;
Durchführen einer iterativen Operation an der ersten Passreferenzlinie basierend auf der Merkmalskonturpunktgruppe, um eine anfängliche angepasste Linie zu erzeugen, wobei die iterative Operation Folgendes umfasst:
Projizieren von Punkten der ersten Passreferenzlinie auf Merkmalspunkte der Merkmalskonturpunktgruppe, die diesen am nächsten liegen, und Bestimmen eines Projektionsfehlers;
Wiederholen des Projizierens und des Bestimmens, wenn der Projektionsfehler nicht geringer als ein voreingestellter Schwellenwert ist; und
Anhalten des Projizierens, wenn der Projektionsfehler geringer als ein voreingestellter Schwellenwert ist; und
Durchführen eines Glättungsverarbeitens an der anfänglichen angepassten Linie unter Verwendung eines Dimensionalitätsreduktionsalgorithmus, um die Zahnfleischlinie auszugeben, **dadurch gekennzeichnet, dass**, umfassend:
Durchführen eines Glättungsverarbeitens an der anfänglichen angepassten Linie unter Verwendung einer Hauptkomponentenanalysemethode und Bestimmen von Hauptrichtungspunkten der anfänglichen angepassten Linie; und
Durchführen einer glatten Verbindung an den Hauptrichtungspunkten der anfänglichen angepassten Linie, die dem Glättungsverarbeiten unterzogen wird, gemäß einem Interpolationsspline, um die Zahnfleischlinie auszugeben;
wobei der geometrische Algorithmus der Krümmung sich auf ein Verfahren bezieht, um ein Rotationsverhältnis des tangentialen Richtungswinkels einer Oberfläche auf dem 3D-Zahnmodell zu einer Bogenlänge zu berechnen, und wobei jeder der Merkmalspunkte durch ein entsprechendes Rotationsverhältnis gekennzeichnet ist.

2. Verfahren nach Anspruch 1, wobei das Vorverarbeiten Filterungsverarbeiten oder Entrauschungsverarbeiten umfasst; und wobei der Schritt des Extrahierens einer Vielzahl von Merkmalspunkten aus dem 3D-Zahnmodell basierend auf einem geometrischen Algorithmus einer Krümmung, Vorverarbeiten jedes der Merkmalspunkte und Ausgeben einer Merkmalskonturpunktgruppe Folgendes umfasst:
nach dem Identifizieren des Formparameters und einer maximalen Bodenoberfläche des 3D-Zahnmodells, Ausrichten des 3D-Zahnmodells auf eine Zielposition;
Extrahieren der Vielzahl von Merkmalspunkten aus dem 3D-Zahnmodell an der Zielposition unter Verwendung des geometrischen Algorithmus der Krümmung, wobei die Vielzahl von Merkmalspunkten in vertieften und hervorstehenden Regionen des 3D-Zahnmodells verteilt ist; und
Durchführen des Filterungsverarbeitens oder des Entrauschungsverarbeitens an den jedem der extrahierten Merkmalspunkte, um die Merkmalskonturpunktgruppe zu erzeugen.

3. Verfahren nach Anspruch 2, wobei der Schritt, nach dem Identifizieren des Formparameters und einer maximalen Bodenoberfläche des 3D-Zahnmodells, des Ausrichtens des 3D-Zahnmodells auf eine Zielposition Folgendes umfasst:
Erfassen des 3D-Zahnmodells, Identifizieren der maximalen Bodenoberfläche und des Formparameters des 3D-Zahnmodells und Ausgeben eines Normalvektors der maximalen Bodenoberfläche;
Rotieren des 3D-Zahnmodells in eine Zielebene gemäß dem Normalvektor der maximalen Bodenoberfläche und einem ersten voreingestellten Normalvektor;
Erfassen einer Kontur des 3D-Zahnmodells auf der Zielebene, Bestimmen einer Skelett-Kurvengleichung eines 3D-Zahnmodells gemäß der Kontur und Ausgeben eines Richtungsvektors des 3D-Zahnmodells basierend auf der Skelett-Kurvengleichung; und
Rotieren des 3D-Zahnmodells an die Zielposition gemäß dem Richtungsvektor des 3D-Zahnmodells und einem zweiten voreingestellten Normalvektor.

4. Verfahren nach Anspruch 3, wobei der erste voreingestellte Normalvektor ein entsprechender Normalvektor des 3D-Zahnmodells ist, wenn das 3D-Zahnmodell in die Zielebene rotiert wird; und der zweite voreingestellte Normalvektor ein entsprechender Normalvektor des 3D-Zahnmodells ist, wenn das 3D-Zahnmodell in die Zielposition rotiert wird.

5. Verfahren nach einem der Ansprüche 3-4, wobei der Schritt des Erfassens einer Kontur des 3D-Zahnmodells auf der Zielebene, Bestimmen einer Skelett-Kurvengleichung eines 3D-Zahnmodells gemäß der Kontur Folgendes umfasst:
Projizieren des 3D-Zahnmodells, um die Kontur des 3D-Zahnmodells zu erlangen;
Extrahieren eines Skeletts aus der Kontur und Entrauschen des extrahierten Skeletts, um die Skelettlinie zu erlangen, und Bestimmen der Skelett-Kurvengleichung basierend auf der Skelettlinie.

6. Verfahren nach einem der Ansprüche 3-5, wobei der Schritt des Ausrichtens des 3D-Zahnmodells auf eine Zielposition Folgendes umfasst:
Erlangen eines Rotationswinkels und einer Rotationsachse gemäß Vektorwerten vor und nach einer Rotation;
Rotieren des 3D-Zahnmodells in eine Zielebene gemäß dem Rotationswinkel und der Rotationsachse;
Erlangen eines anderen Rotationswinkels und einer anderen Rotationsachse gemäß Vektorwerten vor und nach einer anderen Rotation;
Rotieren des 3D-Zahnmodells in die Zielposition gemäß dem anderen Rotationswinkel und der anderen Rotationsachse.

7. Verfahren nach Anspruch 1, wobei der Schritt des Prüfens und des Erlangens der ersten Passreferenzlinie aus den Merkmalskonturlinien mit der gleichen-Richtung gemäß einem vorab eingerichteten Koordinatensystem und einem ersten Schwellenwert Folgendes umfasst:
Prüfen einer Referenzlinie mit einer Mindestabweichung von den Merkmalskonturlinien, um die erste Passreferenzlinie zu erlangen, wobei der erste Schwellenwert ein Wert ist, der die Mindestabweichung zwischen abgeglichenen Merkmalskonturlinien und dem 3D-Zahnmodell darstellt.

8. Verfahren nach einem der Ansprüche 1 bis 7, wobei der Schritt des Durchführens einer iterativen Operation an der ersten Passreferenzlinie basierend auf der Merkmalskonturpunktgruppe, um eine anfängliche angepasste Linie zu erzeugen, Folgendes umfasst:
Durchführen einer geometrischen Superposition an einem Schwerpunkt der ersten Passreferenzlinie und einem Schwerpunkt der Merkmalskonturpunktgruppe basierend auf dem vorab eingerichteten Koordinatensystem; und
Durchführen eines iterativen Anpassens an der ersten Passreferenzlinie und jedem der Merkmalspunkte der Merkmalskonturpunktgruppe unter Verwendung eines iterativen Näherungsalgorithmus, um die anfängliche angepasste Linie zu erzeugen.

9. Verfahren nach einem der Ansprüche 1-8, wobei eine Richtung der ersten Passreferenzlinie die gleiche wie eine Richtung der Merkmalskonturpunktgruppe ist, so dass die erste Passreferenzlinie eine Region der Merkmalskonturpunktgruppe abdeckt.

10. Datenverarbeitungssystem zum Identifizieren einer Zahnfleischlinie eines 3D-Zahnmodells, umfassend:
ein Extraktionsmodul, das dazu konfiguriert ist, eine Vielzahl von Merkmalspunkten aus dem 3D-Zahnmodell basierend auf einem geometrischen Algorithmus einer Krümmung zu extrahieren, jeden der Merkmalspunkte vorzuverarbeiten und eine Merkmalskonturpunktgruppe auszugeben;
ein Abgleichungsmodul, das dazu konfiguriert ist, eine erste Passreferenzlinie aus einem vorab gespeicherten Passreferenzlinienpool zu erlangen, wobei die erste Passreferenzlinie mit einem Formparameter des 3D-Zahnmodells abgeglichen wird;
wobei das Abgleichungsmodul Folgendes umfasst:
eine Bestimmungseinheit, die dazu konfiguriert ist, den Formparameter des 3D-Zahnmodells zu identifizieren und eine Richtung des 3D-Zahnmodells gemäß der Form des 3D-Zahnmodells zu bestimmen;
eine Abgleichungseinheit, die dazu konfiguriert ist, Merkmalskonturlinien aus dem vorab gespeicherten Passreferenzlinienpool zu erlangen, wobei die Merkmalskonturlinien die gleiche Richtung wie Merkmalskonturlinien des 3D-Zahnmodells aufweisen, basierend auf der Richtung des 3D-Zahnmodells; und
eine Prüfungseinheit, die dazu konfiguriert ist, die erste Passreferenzlinie aus den Merkmalskonturlinien mit der gleichen-Richtung gemäß einem vorab eingerichteten Koordinatensystem und einem ersten Schwellenwert zu prüfen und zu erlangen;
ein Iterationsmodul, das dazu konfiguriert ist, eine iterative Operation an der ersten Passreferenzlinie basierend auf der Merkmalskonturpunktgruppe durchzuführen, um eine anfängliche angepasste Linie zu erzeugen, wobei die iterative Operation Folgendes umfasst: Projizieren von Punkten der ersten Passreferenzlinie auf Merkmalspunkte der Merkmalskonturpunktgruppe, die diesen am nächsten liegen, und Bestimmen eines Projektionsfehlers;
Wiederholen des Projizierens und des Bestimmens, wenn der Projektionsfehler nicht geringer als ein voreingestellter Schwellenwert ist; und Anhalten des Projizierens, wenn der Projektionsfehler geringer als ein voreingestellter Schwellenwert ist; und
ein Ausgabemodul, das dazu konfiguriert ist, ein Glättungsverarbeiten an der anfänglichen angepassten Linie unter Verwendung eines Dimensionalitätsreduktionsalgorithmus durchzuführen, um die Zahnfleischlinie auszugeben;
**dadurch gekennzeichnet, dass** das Ausgabemodul Folgendes umfasst:
eine Glättungseinheit, die dazu konfiguriert ist, ein Glättungsverarbeiten an der anfänglichen angepassten Linie unter Verwendung einer Hauptkomponentenanalysemethode durchzuführen und Hauptrichtungspunkte der anfänglichen angepassten Linie zu bestimmen, wobei der Dimensionalitätsreduktionsalgorithmus die Hauptkomponentenanalysemethode umfasst; und
eine glatte Einheit, die dazu konfiguriert ist, eine glatte Verbindung an den Hauptrichtungspunkten der anfänglichen angepassten Linie, die dem Glättungsverarbeiten unterzogen wird, gemäß einem Interpolationsspline durchzuführen, um die Zahnfleischlinie auszugeben;
wobei der geometrische Algorithmus der Krümmung sich auf ein Verfahren bezieht, um ein Rotationsverhältnis des tangentialen Richtungswinkels einer Oberfläche auf dem 3D-Zahnmodell zu einer Bogenlänge zu berechnen, und wobei der jeder der Merkmalspunkte durch ein entsprechendes Rotationsverhältnis gekennzeichnet ist.

11. Computerprogramm, umfassend Anweisungen, die, wenn das Programm durch einen Computer ausgeführt wird, den Computer dazu veranlassen, das Verfahren nach einem der Ansprüche 1-9 umzusetzen.

12. Computerlesbares Speichermedium, umfassend Anweisungen, die, wenn sie durch einen Computer ausgeführt werden, den Computer dazu veranlassen, das Verfahren nach einem der Ansprüche 1-9 umzusetzen, wenn sie durch den Computer ausgeführt werden.

## Revendications

1. Procédé mis en œuvre par ordinateur pour identifier une ligne gingivale d'un modèle de dent en 3D, comprenant :
l'extraction d'une pluralité de points caractéristiques provenant du modèle de dent en 3D sur la base d'un algorithme géométrique de courbure, le prétraitement de chacun des points caractéristiques, et la délivrance en sortie d'un groupe de points de contour caractéristiques ;
l'obtention d'une première ligne de référence d'ajustement provenant d'un parc de lignes de référence d'ajustement pré-stocké, la première ligne de référence d'ajustement étant mise en correspondance avec un paramètre de forme du modèle de dent en 3D, comprenant :
l'identification du paramètre de forme du modèle de dent en 3D, et la détermination d'une direction du modèle de dent en 3D selon la forme du modèle de dent en 3D ;
l'obtention de lignes de contour caractéristiques provenant du parc de lignes de référence d'ajustement pré-stocké, les lignes de contour caractéristiques ayant la même direction qu'un contour caractéristique du modèle de dent en 3D, sur la base de la direction du modèle de dent en 3D ; et
le tri et l'obtention de la première ligne de référence d'ajustement à partir des lignes de contour caractéristiques ayant la même direction selon un système de coordonnées préétabli et un premier seuil ;
la réalisation d'une opération itérative sur la première ligne de référence d'ajustement sur la base du groupe de points de contour caractéristiques, pour générer une ligne ajustée initiale, dans lequel l'opération itérative comprenant : la projection de points de la première ligne de référence d'ajustement vers les points caractéristiques les plus proches de ceux-ci du groupe de points de contour caractéristiques, et la détermination d'une erreur de projection ;
le cyclage de la projection et de la détermination lorsque l'erreur de projection n'est pas inférieure à un seuil défini ; et
l'arrêt de la projection lorsque l'erreur de projection est inférieure à un seuil défini ; et
la réalisation d'un traitement de lissage sur la ligne ajustée initiale en utilisant un algorithme de réduction de dimensionnalité, pour délivrer en sortie la ligne gingivale, **caractérisé en ce que**, comprenant :
la réalisation d'un traitement de lissage sur la ligne ajustée initiale en utilisant un procédé d'analyse en composantes principales, et la détermination de points de direction principale de la ligne ajustée initiale ; et
la réalisation d'une connexion lisse sur les points de direction principale de la ligne ajustée initiale soumis au traitement de lissage selon une spline d'interpolation, pour délivrer en sortie la ligne gingivale ;
dans lequel l'algorithme géométrique de courbure se réfère à un procédé pour calculer un taux de rotation de l'angle de direction tangentielle d'une surface sur le modèle de dent en 3D par rapport à une longueur d'arc, et chacun des points caractéristiques est **caractérisé par** un taux de rotation correspondant.

2. Procédé selon la revendication 1, dans lequel le prétraitement comprend un traitement de filtrage ou un traitement de débruitage ; et l'étape consistant à extraire une pluralité de points caractéristiques provenant du modèle de dent en 3D sur la base d'un algorithme géométrique de courbure, prétraiter chacun des points caractéristiques, et délivrer en sortie un groupe de points de contour caractéristiques comprend :
après l'identification du paramètre de forme et d'une surface de fond maximale du modèle de dent en 3D, l'ajustement du modèle de dent en 3D vers une position cible ;
l'extraction de la pluralité de points caractéristiques provenant du modèle de dent en 3D à la position cible en utilisant l'algorithme géométrique de courbure, dans lequel la pluralité de points caractéristiques sont répartis dans des régions évidées et surélevées du modèle de dent en 3D ; et
la réalisation d'un traitement de filtrage ou d'un traitement de débruitage sur chacun des points caractéristiques extraits, pour générer le groupe de points de contour caractéristiques.

3. Procédé selon la revendication 2, dans lequel l'étape consistant à, après l'identification du paramètre de forme et d'une surface de fond maximale du modèle de dent en 3D, ajuster le modèle de dent en 3D vers une position cible comprend :
l'acquisition du modèle de dent en 3D, l'identification de la surface de fond maximale et du paramètre de forme du modèle de dent en 3D, et la délivrance en sortie d'un vecteur normal de la surface de fond maximale ;
la rotation du modèle de dent en 3D vers un plan cible selon le vecteur normal de la surface de fond maximale et un premier vecteur normal prédéfini ;
l'acquisition d'un contour du modèle de dent en 3D sur le plan cible, la détermination d'une équation curviligne de squelette d'un modèle de dent en 3D selon le contour, et la délivrance en sortie d'un vecteur de direction du modèle de dent en 3D sur la base de l'équation curviligne de squelette ; et
la rotation du modèle de dent en 3D vers la position cible selon le vecteur de direction du modèle de dent en 3D et un second vecteur normal prédéfini.

4. Procédé selon la revendication 3, dans lequel le premier vecteur normal prédéfini est un vecteur normal correspondant du modèle de dent en 3D lorsque le modèle de dent en 3D est mis en rotation vers le plan cible ; et le second vecteur normal prédéfini est un vecteur normal correspondant du modèle de dent en 3D lorsque le modèle de dent en 3D est mis en rotation vers la position cible.

5. Procédé selon l'une quelconque des revendications 3 à 4, dans lequel l'étape consistant à acquérir un contour du modèle de dent en 3D sur le plan cible, déterminer une équation curviligne de squelette d'un modèle de dent en 3D selon le contour comprend :
la projection du modèle de dent en 3D pour obtenir le contour du modèle de dent en 3D ;
l'extraction d'un squelette à partir du contour, et le débruitage du squelette extrait pour obtenir la ligne de squelette, et la détermination de l'équation curviligne de squelette sur la base de la ligne de squelette.

6. Procédé selon l'une quelconque des revendications 3 à 5, dans lequel l'étape consistant à ajuster le modèle de dent en 3D vers une position cible comprend :
l'obtention d'un angle de rotation et d'un axe de rotation selon des valeurs vectorielles avant et après une rotation ;
la rotation du modèle de dent en 3D vers un plan cible selon l'angle de rotation et l'axe de rotation ;
l'obtention d'un autre angle de rotation et d'un autre axe de rotation selon des valeurs vectorielles avant et après une autre rotation ;
la rotation du modèle de dent en 3D vers la position cible selon l'autre angle de rotation et l'autre axe de rotation.

7. Procédé selon la revendication 1, dans lequel l'étape consistant à trier et obtenir la première ligne de référence d'ajustement à partir des lignes de contour caractéristiques ayant la même direction selon un système de coordonnées préétabli et un premier seuil comprend :
le tri d'une ligne de référence présentant un écart minimal par rapport aux lignes de contour caractéristiques, pour obtenir la première ligne de référence d'ajustement, dans lequel le premier seuil est une valeur représentant l'écart minimal entre des lignes de contour caractéristiques mises en correspondance et le modèle de dent en 3D.

8. Procédé selon l'une quelconque des revendications 1 à 7, dans lequel l'étape consistant à réaliser une opération itérative sur la première ligne de référence d'ajustement sur la base du groupe de points de contour caractéristiques, pour générer une ligne ajustée initiale comprend :
la réalisation d'une superposition géométrique sur un centroïde de la première ligne de référence d'ajustement et un centroïde du groupe de points de contour caractéristiques sur la base du système de coordonnées préétabli ; et
la réalisation d'un ajustement itératif sur la première ligne de référence d'ajustement et chacun des points caractéristiques du groupe de points de contour caractéristiques en utilisant un algorithme itératif approximatif, pour générer la ligne ajustée initiale.

9. Procédé selon l'une quelconque des revendications 1 à 8, dans lequel une direction de la première ligne de référence d'ajustement est la même qu'une direction du groupe de points de contour caractéristiques de sorte que la première ligne de référence d'ajustement couvre une région du groupe de points de contour caractéristiques.

10. Système de traitement de données pour identifier une ligne gingivale d'un modèle de dent en 3D, comprenant :
un module d'extraction, configuré pour extraire une pluralité de points caractéristiques provenant du modèle de dent en 3D sur la base d'un algorithme géométrique de courbure, prétraiter chacun des points caractéristiques, et délivrer en sortie un groupe de points de contour caractéristiques ;
un module de mise en correspondance, configuré pour obtenir une première ligne de référence d'ajustement provenant d'un parc de lignes de référence d'ajustement pré-stocké, la première ligne de référence d'ajustement étant mise en correspondance avec un paramètre de forme du modèle de dent en 3D ;
dans lequel le module de mise en correspondance comprend :
une unité de détermination, configurée pour identifier le paramètre de forme du modèle de dent en 3D, et déterminer une direction du modèle de dent en 3D selon la forme du modèle de dent en 3D ;
une unité de mise en correspondance, configurée pour obtenir des lignes de contour caractéristiques provenant du parc de lignes de référence d'ajustement pré-stocké, les lignes de contour caractéristiques ayant la même direction qu'un contour caractéristique du modèle de dent en 3D, sur la base de la direction du modèle de dent en 3D ; et
une unité de tri, configurée pour trier et obtenir la première ligne de référence d'ajustement à partir des lignes de contour caractéristiques ayant la même direction selon un système de coordonnées préétabli et un premier seuil ;
un module d'itération, configuré pour réaliser une opération itérative sur la première ligne de référence d'ajustement sur la base du groupe de points de contour caractéristiques, pour générer une ligne ajustée initiale, dans lequel l'opération itérative comprend : la projection de points de la première ligne de référence d'ajustement vers les points caractéristiques les plus proches de ceux-ci du groupe de points de contour caractéristiques, et la détermination d'une erreur de projection ;
le cyclage de la projection et de la détermination lorsque l'erreur de projection n'est pas inférieure à un seuil défini ;
et l'arrêt de la projection lorsque l'erreur de projection est inférieure à un seuil défini ; et un module de sortie, configuré pour réaliser un traitement de lissage sur la ligne ajustée initiale en utilisant un algorithme de réduction de dimensionnalité, pour délivrer en sortie la ligne gingivale ;
**caractérisé en ce que**, le module de sortie comprend :
une unité de lissage, configurée pour réaliser un traitement de lissage sur la ligne ajustée initiale en utilisant un procédé d'analyse en composantes principales, et déterminer des points de direction principale de la ligne ajustée initiale, dans lequel l'algorithme de réduction de dimensionnalité comprend le procédé d'analyse en composantes principales ; et
une unité de raccordement lisse, configurée pour réaliser une connexion lisse sur les points de direction principale de la ligne ajustée initiale soumis au traitement de lissage selon une spline d'interpolation, pour délivrer en sortie la ligne gingivale ;
dans lequel l'algorithme géométrique de courbure se réfère à un procédé pour calculer un taux de rotation de l'angle de direction tangentielle d'une surface sur le modèle de dent en 3D par rapport à une longueur d'arc, et chacun des points caractéristiques est **caractérisé par** un taux de rotation correspondant.

11. Programme informatique comprenant des instructions qui, lorsque le programme est exécuté par un ordinateur, amènent l'ordinateur à réaliser le procédé selon l'une quelconque des revendications 1 à 9.

12. Support de stockage lisible par ordinateur comprenant des instructions qui, lorsqu'elles sont exécutées par un ordinateur, amènent l'ordinateur à réaliser le procédé selon l'une quelconque des revendications 1 à 9 lorsqu'elles sont exécutées par l'ordinateur.
